# EUROPÄISCHE PATENTSCHRIFT

(11) **EP 1 321 290 B1**
(45) Veröffentlichungstag und Bekanntmachung des Hinweises auf die Patenterteilung: **26.07.2006**
(21) Anmeldenummer: 02023921.6
(22) Anmeldetag: 25.10.2002
(51) Int. Cl.: B32B 17/10, C03C 27/12, G01N 21/29, C08K 5/00

(54) **Verfahren zur Herstellung von Verbundglas**
Method for making laminated glass
Procédé de fabrication de verre laminé

(30) Priorität: 13.12.2001 DE 10161242
(43) Veröffentlichungstag der Anmeldung: 25.06.2003
(73) Patentinhaber: Galac, Andreas Peter, A-4052 Ansfelden (AT)
(72) Erfinder: Galac, Andreas Peter, 4052 Ansfelden (AT); Griebel, Günther, 06124 Halle (DE)
(74) Vertreter: Berngruber, Otto

(56) Entgegenhaltungen:
- EP-A- 0 492 830
- DE-A- 1 669 723
- JP-A- 1 204 902
- JP-A- 1 297 483
- US-A- 4 698 386
- US-A- 4 788 240
- US-A- 5 845 034
- US-B1- 6 309 797
- PATENT ABSTRACTS OF JAPAN vol. 014, no. 566 (C-0789), 17. Dezember 1990 (1990-12-17) & JP 02 245003 A (KURARAY CO LTD), 28. September 1990 (1990-09-28)
- PATENT ABSTRACTS OF JAPAN vol. 009, no. 120 (P-358), 24. Mai 1985 (1985-05-24) & JP 60 004940 A (SEKISUI KAGAKU KOGYO KK), 11. Januar 1985 (1985-01-11)

## Beschreibung

Die Erfindung bezieht sich auf ein Verfahren zur Herstellung eines Verbundglases, einschließlich eines Verbundsicherheitsglases nach dem Oberbegriff des Anspruchs 1.

Verbundglas bzw. Verbundsicherheitsglas besteht aus mindestens zwei Glasscheiben, die durch eine elastische Zwischenschicht verbunden sind, die durch ein Gießharz oder eine Folie gebildet wird. Durch die elastische Zwischenschicht werden im Falle eines Glasbruchs die Splitter an der elastischen Zwischenschicht gebunden und damit Verletzungen vermieden.

Als Gießharz kann ein chemisch härtendes, in der Regel mehrkomponentiges Gießharz zwischen den mindestens zwei Glasscheiben eingebracht und dann gehärtet werden. Der Härtevorgang beginnt in der Regel nach zwei bis sechs Stunden und ist erst nach Wochen abgeschlossen. Wenn ein durch UV-Licht härtbares einkomponentiges Gießharz verwendet wird, dauert der Härtevorgang hingegen zwischen etwa zehn Minuten und einer Stunde.

Die UV-härtbaren Gießharze enthalten einen UV-Fotoinitiator oder -Fotosensibilisator, der die UV-Strahlung absorbiert. Während sich der Fotoinitiator zersetzt, überträgt der Fotosensibilisator die absorbierte Energie auf ein anderes Molekül, das sich zersetzt. Die am Markt befindlichen UV-härtbaren Gießharze, meist Acrylgießharze, werden nach dem Verguss zwischen mindestens zwei Glasscheiben unter eine UV-Lichtquelle gelegt. Die UV-Lichtquelle strahlt mit einer bestimmten Intensität im Wellenbereich von 200 bis 800 nm, wodurch der UV-Initiator bzw. Sensibilisator die Härtung in Gang setzt. Die UV-Lichtquelle wird in der Regel nur an einer der beiden Glasscheiben positioniert. Nach einigen Minuten ist das Gießharz ausgehärtet und das Verbundglas kann entnommen werden.

Die Härtung des UV-härtbaren Gießharzes ist allerdings schwer zu kontrollieren. So erschwert der Umstand, dass das eingesetzte Glas ebenfalls Lichtwellen im UV-Bereich absorbiert, eine präzise Feststellung, wann die Härtung beendet ist. Dies gilt um so mehr, als bei der Herstellung von Verbundglas bzw. Verbundsicherheitsglas verschiedene Glasstärken zum Erreichen verschiedener Sicherheitsstufen eingesetzt werden.

Je dicker die eingesetzte Glasscheibe ist, durch die das Gießharz mit UV-Licht bestrahlt wird, um so länger muss die UV-Bestrahlung durchgeführt werden. Auch variiert die Schichtstärke des Gießharzes, um bestimmte Sicherheitsgrade des Verbundglases zu erreichen. Es ist daher eine erhebliche Erfahrung notwendig, um keine zu lange, aber auch keine zu kurze Bestrahlung durchzuführen, doch selbst mit Erfahrung ist es praktisch unmöglich, den Zeitpunkt einigermaßen genau zu ermitteln, an dem das Gießharz vollständig ausgehärtet ist.

Ein weiteres erhebliches Problem stellt der Schwund des Gießharzes beim Aushärten dar. Bei dem am Markt befindlichen UV-härtenden Gießharz kann ein Schwund bis zu 18 Vol.-% auftreten, der bei der Berechnung der erforderlichen Gießharzmenge zu berücksichtigen ist. Das heißt, es muss ein um bis zu 18% größeres Gießharzvolumen zwischen die Glasscheiben eingebracht werden, als das Volumen des Gießharzes nach dem Aushärten ausmacht. Durch die mechanischen Eigenschaften der eingesetzten Glasscheiben baucht sich die Verbundglasanordnung in der Regel in der Mitte aus. Das heißt, das Gießharz verteilt sich nicht gleichmäßig über die ganze Verbundglasfläche, sondern weist in der Mitte des Verbundglases eine größere Schichtdicke auf. Die unterschiedliche Schichtdicke führt zu einer weiteren Erschwerung der Feststellung des Aushärtezeitpunkts des Gießharzes.

Die zu härtende Verbundglasfläche kann 15 qm und mehr betragen. Zur Aushärtung des Gießharzes dient dann häufig eine Einrichtung, die eine Vielzahl von UV-Lichtquellen aufweist, unter denen die zu härtende Verbundglasfläche angeordnet wird. Wenn ein Teil dieser UV-Lichtquellen ausfällt, wird dies häufig erst beim Schneiden der Verbundglasfläche festgestellt, mit der Folge, dass das Gießharz in dem Bereich, in dem eine UV-Lichtquelle ausgefallen gewesen ist, noch nicht ausgehärtet ist.

Aufgabe der Erfindung ist es, bei der Herstellung eines Verbundglases, bei dem die Glasscheiben durch ein UV-Licht härtbares Gießharz miteinander verbunden sind, den Zeitpunkt, an dem das Gießharz ausgehärtet ist, auf einfache Weise genau und zuverlässig festzustellen.

Dies wird erfindungsgemäß mit dem im Anspruch 1 gekennzeichneten Verfahren erreicht. In den Unteransprüchen sind vorteilhafte Ausgestaltungen des erfindungsgemäßen Verfahrens wiedergegeben.

Nach dem erfindungsgemäßen Verfahren enthält das Gießharz einen fotoreaktiven Farbstoff, der nicht mehr sichtbar ist, wenn die Härtung des Gießharzes mit dem UV-Licht beendet ist. Das heißt, der Farbstoff kann ein Farbstoff sein, der durch die UV-Lichtquelle von seinem farbigen Zustand in einen farblosen Zustand übergeht und/oder sich in farblose Komponenten zersetzt. Der Farbstoff wird in dem Gießharz in einer solchen Menge eingesetzt, dass die Farbe bei der gewählten Schichtdicke des Gießharzes zwischen den Glasscheiben gut sichtbar ist. Dabei wird nicht nur der Zeitpunkt der vollzogenen Härtung des Gießharzes durch das Verschwinden der Farbe des Farbstoffs angezeigt, sondern auch der Verlauf des Härtevorgangs aufgrund der Abnahme der Intensität der Farbe. Der Aushärtung des Gießharzes brauchen also keine fehleranfälligen Erfahrungswerte mehr zugrunde gelegt werden, vielmehr wird die vollzogene Härtung des Gießharzes optisch angezeigt und zwar unabhängig von der Dicke der eingesetzten Glasscheiben, der Schichtdicke des Gießharzes usw. Bei Farblosigkeit kann damit der Anwender von einem perfekten Endprodukt ausgehen.

Als fotoreaktive Farbstoffe sind eine Vielzahl von Farbstoffen einsetzbar. Eine Klassifizierung der Farbstoffe ist beispielsweise in Ullmann's Encyclopedia of Industrial Chemistry 5. Auflage, Bd 9, S. 73 ff und Organische Chemie 1. Auflage, S. 743 ff, Deutscher Verlag für Grundstoffindustrie, Leipzig 1985, angegeben.

Entsprechend ihrer chemischen Konstitution lassen sich die Farbstoffe in die folgenden wichtigsten Klassen einteilen:
- Anthrachinon-Farbstoffe
- Azin-Farbstoffe
- Azo-Farbstoffe
- Azo-annulen-Farbstoffe
- Benzochinon- und Naphthochinon-Farbstoffe
- Chinonimin-Farbstoffe
- Indigo-Farbstoffe
- Methin-Farbstoffe
- Naphthalamid-Farbstoffe
- Nitro-Farbstoffe
- Polymethin-Farbstoffe
- Schwefel-Farbstoffe
- Di- und Triarylmethan-Farbstoffe
- Xanthen-Farbstoffe

Der Fotoinitiator bzw. Fotosensibilisator zum Aushärten des Gießharzes kann vor allem Licht mit einer Wellenlänge im Bereich von 250 bis 440, vorzugsweise 300 bis 425 nm absorbieren. Um den Fotoinitiator bzw. Fotosensibilisator in dem Gießharz, also die fotochemische Reaktivität des Gießharzes nicht zu behindern, soll der verwendete Farbstoff möglichst keine Absorptionsbande aufweisen, die ganz oder weitgehend im Absorptionswellenlängenbereichs des Fotoinitiators bzw. Fotosensibilisators liegt, d. h. der Farbstoff soll in diesem Wellenbereich vorzugsweise höchstens 50%, insbesondere weniger als 10% der Strahlungsenergie absorbieren, die der Fotoinitiator bzw. Fotosensibilisator in diesem Bereich absorbiert. Demgemäß weist die UV-Lichtquelle vorzugsweise ein entsprechend breites Wellenlängenspektrum auf. Das heißt, sie kann sich von 200 nm bis in den sichtbaren Bereich hinein erstrecken, also z. B. von 200 bis 800 nm. Vorzugsweise wird daher eine UV-Lichtquelle verwendet, die auch im sichtbaren Bereich eine hohe Lichtstärke besitzt, z. B. mindestens 5% der Gesamtstrahlungsenergie der Lichtquelle.

Als Gießharze können die verschiedensten Harze eingesetzt werden, beispielsweise (Meth)acrylharz, ungesättigte Polyesterharze (UP), aliphatische und aromatische Epoxy-(Meth)acryclat-Harze, Polyester-(Meth)acrylat-Harze, aliphatische oder aromatische Urethan-(Meth)acrylat-Harze, Polyether-(Meth)acrylat-Harze oder Vinylester-Harze.

Diese Harze sind in reaktiven Lösemitteln gelöst. Dies können sein: Styrol, Monomere oder oligomere Acrylate oder Methacrylate als auch Gemische von diesen.

Aus den Einzelkomponenten, also Vorpolymeren, Lösemittel, Fotoinitiator bzw. Fotosensibilisator und Farbstoff wird das erfindungsgemäß eingesetzte Gießharz formuliert. Dabei werden die Einzelkomponenten so aufeinander abgestimmt, dass das Gießharz im Dunkeln stabil ist und der Farbstoff erst bei Belichtung mit einer UV-Lichtquelle auszubleichen beginnt. Der Ausbleichvorgang ist abgeschlossen, also der Farbstoff nicht mehr sichtbar, wenn das Gießharz bis zu einem bestimmten Härtungsgrad ausgehärtet ist.

### Beispiel 1

1500 g des handelsüblichen Acryl-Gießharzes "Chemetall UV11", das einen Fotoinitiator enthält, werden mit 0,2 Gew.-% einer 3,6-Dichlorfluorescein-Lösung (10 Gew.-% Farbstoff in Ethylglykol) versetzt. Das Gießharz weist eine intensive hellrote Farbe auf.

Das hellrote Gießharz wird auf eine Glasscheibe gegossen und darauf eine Glasscheibe gelegt, um eine hellrote Gießharzzwischenschicht zwischen den beiden Glasscheiben zu bilden. Die aus den beiden Glasscheibe und der farbigen Gießharzzwischenschicht gebildete Anordnung wird mit einer handelsüblichen UV-Lampe zum Härten von UV-härtbarem Gießharz für Verbundglasscheiben bestrahlt. Nach 10 Minuten ist das Gießharz geliert, nach 20 Minuten ist die Farbe des Gießharzes nicht mehr zu sehen. Nach weiteren 5 Minuten weist das Gießharz die optimale Aushärtung auf.

### Beispiel 2

1364 g des handelsüblichen ungesättigten Polyesterharzes "Norsodyne E 8166", welches in der Lieferform 45 Gew.-% Styrol enthält, werden mit 136 g Hydroxypropylacrylat versetzt. Als Fotoinitiator wird der Harzmischung 1 Gew.-% des handelsüblichen "Lucirin TPO" zugegeben. Als Indikatorfarbstoff werden 100 ppm "Safranin T" verwendet. Das Gießharz hat eine intensiv purpurne Farbe.

Aus dem farbigen Gießharz wird wie im Beispiel 1 eine farbige Gießharzzwischenschicht zwischen zwei Glasscheiben gebildet, die mit der UV-Lampe bestrahlt wird.

Nach 7 Minuten ist das Harz geliert, nach 12 Minuten hat sich die Gießharzschicht entfärbt und nach 15 Minuten weist der Harzverbund die optimale Aushärtung auf.

### Beispiel 3

1500 g des handelsüblichen Gießharzes "Siglam Standard" werden mit 0,5 Gew.-% des Fotoinitiators "Darocore 1173" vermischt. Als Indikatorfarbstoff werden 12 ppm Methylenblau verwendet. Das Methylenblau wird dem Harz als 3%ige Lösung in Ethanol zugegeben und gut vermischt. Das Gießharz hat eine dunkelblaue Farbe.

Aus dem farbigen Gießharz wird wie im Beispiel 1 eine farbige Gießharzzwischenschicht zwischen zwei Glasscheiben gebildet, die mit der UV-Lampe bestrahlt wird.

Nach 5 Minuten ist das Harz geliert, nach 25 Minuten ist das Methylenblau ausgebleicht und nach 27 Minuten hat der Verbund die optimale Festigkeit erreicht.

## Patentansprüche

1. Verfahren zur Herstellung eines Verbundglases aus Glasscheiben, die durch ein durch UV-Licht härtbares Gießharz miteinander verbunden sind, das zwischen die Glasscheiben eingebracht wird, **dadurch gekennzeichnet, dass** das Gießharz einen fotoreaktiven Farbstoff enthält, der nach der Härtung des Gießharzes mit dem UV-Licht nicht mehr sichtbar ist.

2. Verfahren nach Anspruch 1, **dadurch gekennzeichnet, dass** die von dem Farbstoff in dem Gießharz absorbierte Strahlungsenergie in dem Wellenlängenbereich, in dem das UV-Licht das Gießharz härtet, weniger als 50% der Strahlungsenergie beträgt, die das Gießharz in diesem Wellenlängenbereich zur Härtung absorbiert.

3. Verfahren nach Anspruch 1 oder 2, **dadurch gekennzeichnet, dass** der Farbstoff wenigstens ein Farbstoff aus folgender Gruppe ist:
- Anthrachinon-Farbstoff
- Azin-Farbstoff
- Azo-Farbstoff
- Azo-annulen-Farbstoff
- Benzochinon- oder Naphthochinon-Farbstoff
- Chinonimin-Farbstoff
- Indigo-Farbstoff
- Methin-Farbstoff
- Naphthalamid-Farbstoff
- Nitro-Farbstoff
- Polymethin-Farbstoff
- Schwefel-Farbstoff
- Di- oder Triarylmethan-Farbstoff
- Xanthen-Farbstoff

4. Verfahren nach einem der vorstehenden Ansprüche, **dadurch gekennzeichnet, dass** das Gießharz ein (Meth)acrylharz, ein ungesättigtes Polyesterharz, ein aliphatisches oder aromatisches Epoxy(Meth)acrylat-Harz, Polyester(Meth) acrylat-Harz, Urethan (Meth) acrylat-Harz, Polyester (Meth) acrylat-Harz oder Vinylester-Harz ist.

## Claims

1. A method for producing laminated glass from glass plates interconnected by a UV-light-curable casting resin introduced between the glass plates, **characterized in that** the casting resin contains a photoreactive dye which is no longer visible after the casting resin is cured with the UV light.

2. The method according to claim 1, **characterized in that** the radiant energy absorbed by the dye in the casting resin in the wavelength range in which the UV light cures the casting resin is less than 50% of the radiant energy which the casting resin absorbs in said wavelength range for curing.

3. The method according to claim 1 or 2, **characterized in that** the dye is at least one dye from the following group:
- anthraquinone dye
- azine dye
- azo dye
- azo annulene dye
- benzoquinone or naphthoquinone dye
- quinone imine dye
- indigo dye
- methine dye
- naphthalamide dye
- nitro dye
- polymethine dye
- sulfur dye
- di- or triarylmethane dye
- xanthene dye

4. The method according to any of the above claims, **characterized in that** the casting resin is a (meth)acrylic resin, an unsaturated polyester resin, an aliphatic or aromatic epoxy (meth)acrylate resin, polyester (meth)acrylate resin, urethane (meth)acrylate resin, polyester (meth)acrylate resin or vinyl ester resin.

## Revendications

1. Procédé de fabrication d'un verre de sécurité feuilleté en plaques de verre qui sont reliées l'une à l'autre par une résine moulée durcissable à la lumière UV, laquelle peut être appliquée entre les plaques de verre, **caractérisé en ce que** la résine moulée contient un colorant photoréactif qui n'est plus visible à la lumière UV après le durcissement de la résine moulée.

2. Procédé selon la revendication 1, **caractérisé en ce que** l'énergie de rayonnement absorbée par le colorant dans la résine moulée est, dans la plage de longueur d'ondes dans laquelle la lumière UV durcit la résine moulée, inférieure à 50 % de l'énergie de rayonnement qu'absorbe la résine moulée dans cette plage de longueur d'ondes pour le durcissement.

3. Procédé selon la revendication 1 ou 2, **caractérisé en ce que** le colorant est au moins un colorant du groupe suivant :
- colorant d'antraquinone
- colorant d'azine
- colorant azoïque
- colorant d'azo-annulène
- colorant de benzoquinone ou de naphthoquinone
- colorant de quinoneimine
- colorant indigoïque
- colorant de méthine
- colonant de naphthalamide
- colorant nitro
- colorant de polyméthine
- colorant au soufre
- colorant de diarylméthane ou triarylméthane
- colorant de xanthène.

4. Procédé selon l'une des revendications précédentes, **caractérisé en ce que** la résine moulée est une résine méthacrylique, une résine de polyester non saturée, des résines aliphatiques ou aromatiques telles qu'une résine époxy (méth)acrylate, une résine polyester (méth)acrylate, une résine uréthane (méth)acrylate, une résine polyester (méth)acrylate ou une résine vinylester.
